# EUROPEAN PATENT SPECIFICATION

(11) **EP 3 684 843 B1**
(45) Date of publication and mention of the grant of the patent: **22.12.2021**
(21) Application number: 18780284.8
(22) Date of filing: 19.09.2018
(51) Int. Cl.: C08G 73/10

(54) **METHOD OF MAKING A POLYETHERIMIDE**
METHODE ZUR HERSTELLUNG EINES POLYETHERIMIDEN
METHODE DE PREPARATION D'UN POLYETHERIMIDE

(30) Priority: 20.09.2017 EP 17382618
(43) Date of publication of application: 29.07.2020
(73) Proprietor: SHPP Global Technologies B.V., 4612 PX Bergen op Zoom (NL)
(72) Inventor: TOPLE, Nitin Vilas, Mt. Vernon, Indiana 47620-9367 (US); QUEVEDO SANCHEZ, Bernabe, 30390 Cartagena (ES); HEMMER, Gregory L., Mt. Vernon, Indiana 47620-9367 (US)
(74) Representative: Balder IP Law, S.L.
(86) International application number: PCT/US2018/051681
(87) International publication number: WO 2019/060374

(56) References cited:
- EP-A2- 0 095 174
- US-A- 4 073 773
- US-A- 4 543 368
- US-A1- 2004 260 055

## Description

### BACKGROUND

Polyetherimides are highly useful engineering thermoplastics. Polyetherimides can be made by solution polymerization methods or by melt polymerization methods. Melt polymerization methods offer advantages but these advantages have been outweighed by difficulties associated with both the method and the polymer produced by the method. Further improvements to melt polymerization methods are needed.

### SUMMARY

Disclosed herein is a method of making a polyetherimides with a glass transition temperature from 180°C to 310°C comprising melt mixing a first bis(ether anhydride) and a diamine to form an intermediate polyetherimide with an anhydride-amine stoichiometry of -2 to -40 mol% and melt mixing the intermediate polyetherimide with a second bis(ether anhydride) for greater than 3 minutes at a pressure less than atmospheric pressure and a temperature 50 to 225°C greater than the glass transition temperature of the final polyetherimide to produce a final polyetherimide. The melt mixing is essentially free of solvent.

Also disclosed herein is a method of making a polyetherimide comprising melt mixing a first polyetherimide with a diamine to produce an intermediate polyetherimide with an anhydride-amine stoichiometry of -2 to -40 mol% and melt mixing the intermediate polyetherimide with a bis(ether anhydride) at a temperature 50 to 225°C greater than the glass transition temperature of the final polyetherimide for greater than 3 minutes to produce the final polyetherimide. The melt mixing is essentially free of solvent.

The methods discussed above produce a final polyetherimide that has a change in viscosity of -35% to 50% after being maintained for 30 minutes at 390 °C wherein melt viscosity is determined by ASTM D4440. The final polyetherimide has a polydispersity index of less than or equal to 2.75. The final polyetherimide also has a solvent content less than 50 ppm. The final polyetherimide may have a chlorine content less than or equal to 50 ppm.

The above described and other features are exemplified by the following detailed description.

### DETAILED DESCRIPTION

Melt polymerization facilitates the production of polyetherimides having little or no residual solvent. However, it has been difficult to make polyetherimides using melt polymerization that have melt stability and a low polydispersity index. It was discovered that increasing the melt mixing time and using an intermediate polyetherimide having an anhydride-amine stoichiometry of -2 to -40 mol% resulted in a final polyetherimide with good melt stability and a low polydispersity index (PDI less than or equal to 2.75 or less than 2.5). Previous continuous melt polymerization methods typically employed an extruder. Extruders typically have a melt mixing time of 30 second to three minutes.

Melt stability is a measurement of the change in viscosity of the polymer after being maintained at a specified elevated temperature for a specified time. Melt stability as described herein is the change in melt viscosity after being held at 390°C for 30 minutes in a parallel plate rheometer. Melt viscosity is determined according to ASTM D4440. For example, if the melt viscosity of a polymer increases by 60% after exposure to 390°C for 30 minutes then the melt stability is 60%. If the melt viscosity decreases by 10% then the melt stability is -10%. Previous methods of melt polymerization for polyetherimides have not been able to produce a polyetherimide with an acceptable melt stability, for example a melt stability less than or equal to 50%. This is in contrast to polyetherimides produced by solution polymerization which can have a melt stability of less than or equal to 25%. Melt stability can have a significant impact on the ability to form articles from a polyetherimide.

Anhydride-amine stoichiometry is defined as the mol% of anhydride - the mol% of amine groups. An anhydride-amine stoichiometry with a negative value indicates an excess of amine groups. Anhydride content and amine content can be determined by Fourier transformed infrared spectroscopy or near infrared spectroscopy.

Polyetherimides comprise more than 1, for example 2 to 1000, or 5 to 500, or 10 to 100 structural units of formula (1) 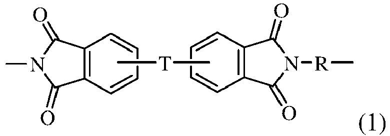 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In some embodiments R is divalent group of one or more of the following formulas (2) 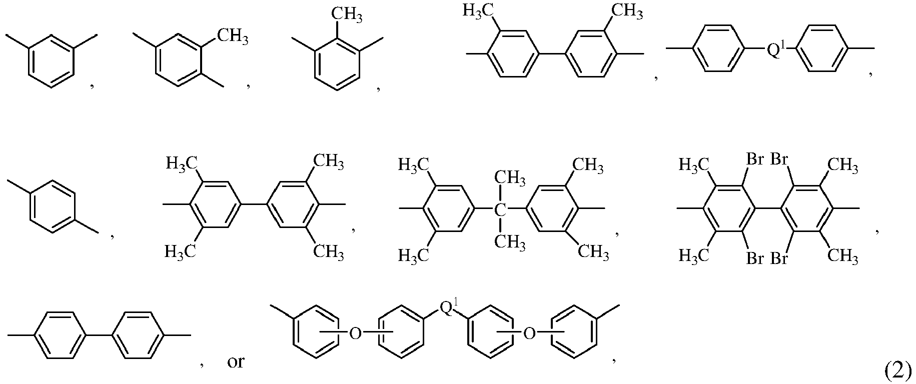 wherein Q¹ is -O-, -S-, -C(O)-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent or at least 50 mole percent of the R groups contain sulfone groups, and in other embodiments no R groups contain sulfone groups.

Further in formula (1), T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (3) 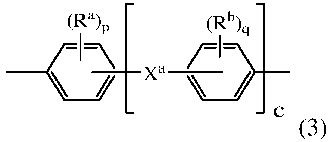 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C6 arylene group. The bridging group X^{a} may be a single bond, -O-, -S-, -S(O)-, -S(O)₂-, -C(O)-, or a C₁₋₁₈ organic bridging group. The C₁₋₁₈ organic bridging group may be cyclic or acyclic, aromatic or non-aromatic, and may further comprise heteroatoms such as halogens, oxygen, nitrogen, sulfur, silicon, or phosphorous. The C₁₋₁₈ organic group may be disposed such that the C6 arylene groups connected thereto are each connected to a common alkylidene carbon or to different carbons of the C₁₋₁₈ organic bridging group. A specific example of a group Z is a divalent group of formula (3a) 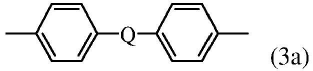 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O wherein Z is a divalent group of formula (3a) and Q is 2,2-isopropylidene. Alternatively, the existing polyetherimide may be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some embodiments, the polyetherimide is a copolymer that optionally comprises additional structural imide units that are not polyetherimide units, for example imide units of formula (4) 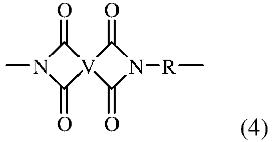 wherein R is as described in formula (1) and each V is the same or different, and is a substituted or unsubstituted C₆₋₂₀ aromatic hydrocarbon group, for example a tetravalent linker of the formulas 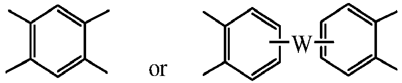 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably may be present in amounts of 0 to 10 mol% of the total number of units, or 0 to 5 mol% of the total number of units, or 0 to 2 mole % of the total number of units. In some embodiments, no additional imide units are present in the polyetherimide.

The polyetherimides may have a melt index of 0.1 to 10 grams per minute (g/min), as measured by American Society for Testing Materials (ASTM) D1238 at 340 to 370°C, using a 6.7 kilogram (kg) weight. In some embodiments, the polyetherimide has a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimides typically have an intrinsic viscosity greater than 0.2 deciliters per gram (dl/g), or, more specifically, 0.35 to 0.7 dl/g as measured in m-cresol at 25°C.

The final polyetherimide has a glass transition temperature of 180°C to 310°C as determined by differential scanning calorimetry (ASTM D3418).

The method of making the polyetherimide comprises melt mixing starting materials to form an intermediate polyetherimide. The intermediate polyetherimide has an anhydride-amine stoichiometry of -2 to -40 mol%. The intermediate polyetherimide is melt mixed with a bis(ether anhydride) for greater than three minutes at a temperature 50 to 225°C greater than the glass transition temperature of the final polyetherimide to form the final polyetherimide. The method can be performed in a batch mode or a continuous mode. In some embodiments the method is performed in a continuous mode.

In some embodiments the intermediate polyetherimide is formed by melt mixing a bis(ether anhydride) and a diamine. An optional chain stopper may also be included. When the intermediate polyetherimide is made in this manner the intermediate polyetherimide is melt mixed with a bis(ether anhydride) for greater than three minutes at a temperature 50 to 225°C greater than the glass transition temperature of the final polyetherimide and a pressure less than atmospheric pressure. In some embodiments the final 10% to 75% of the polymerization time is conducted at a pressure less than or equal to 50,000 Pa, less than or equal to 25,000 Pa, less than or equal to 10,000 Pa, less than or equal to 5,000 Pa, or less than or equal to 1,000 Pa. In some embodiments the pressure is reduced once the reaction mixture has a weight average molecular weight that is greater than or equal to 20%, or greater than or equal to 60%, or greater than or equal to 90% of the weight average molecular weight of the intermediate polyetherimide.

In some embodiments the intermediate polyetherimide is formed by melt mixing a first polyetherimide and a diamine.

In some embodiments the intermediate polyetherimide has a weight average molecular weight which is 10 to 60 %, or 20 to 60 %, or 30 to 60 % of the weight average molecular weight of the final polyetherimide.

Melt mixing may occur in a melt mixing apparatus capable of having a residence time greater than three minutes. Exemplary equipment includes batch mixers, kneader reactors, agitated thin film evaporators, and large volume processing equipment capable of handling viscosities greater than 500,000 mPas (500,000 centipoise). The reaction temperature may be 50 to 250°C, or 50 to 200°C, or 100 to 150°C above the glass transition temperature of the final polyetherimide. The intermediate polyetherimide and final polyetherimide may be produced in the same melt mixing apparatus without isolation or separation of the intermediate polyetherimide.

The diamine used in the method may be any diamine stable at the reaction temperatures described herein. The diamine may be an aromatic diamine of formula (10)

H₂N-R¹-NH₂ (10)

wherein R¹ is a substituted or unsubstituted divalent aromatic group, such as a C₆₋₂₀ aromatic hydrocarbon group or a halogenated derivative thereof, in particular a divalent group of formulae (2) as described above, wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an embodiment R¹ is m-phenylene, p-phenylene, or a diaryl sulfone.

R¹ may be the same as or different from R. In some embodiments R and R¹ are different C₆₋₂₀ aromatic hydrocarbon groups. In some embodiments R and R¹ are the same C₆₋₂₀ aromatic hydrocarbon group. In a particular embodiment R and R¹ are both derived from m-phenylenediamine.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds may be used. C₁₋₄ alkylated or poly(C₁₋₄)alkylated derivatives of any of the foregoing may be used, for example a polymethylated 1,6-hexanediamine. Combinations of these compounds may also be used. In some embodiments the organic diamine is m-phenylenediamine, p-phenylenediamine, 4,4'-diaminodiphenyl sulfone, 3,4'-diaminodiphenyl sulfone, 3,3'-diaminodiphenyl sulfone, oxydianiline, or a combination comprising at least one of the foregoing.

The intermediate polyetherimide is melt mixed with a bis(ether anhydride) to form the final polyetherimide. The amount of bis(ether anhydride) is based on the amount of amine end groups in the intermediate polyetherimide and may be chosen to result in a final polyetherimide having an anhydride-amine stoichiometry of -1 to 2.5 mol%.

It is desirable to operate the melt polymerization as a continuous process. In order to continuously monitor the ratio of anhydride to amine end groups in the polyetherimide a near infra-red spectroscopy (NIR) detection system may be used to measure the excess anhydride and amine end groups. A molten polymer continuously moves through a channel having a fixed path length and located between an emitter and a receiver. The fixed path length may be 2 to 8, or 4 to 6 millimeters (mm). Using a near-infrared (NIR) spectrometer, NIR light emitted from the spectrometer source is sent to the emitter and passes through the molten polymer in the channel. The receiver receives NIR light that has not been absorbed by the molten polymer and sends it to the detector of NIR spectrometer where an absorbance spectrum is generated. Absorbance wavelength corresponding to anhydride and amine end groups are compared to calibration curve to determine the polymer stoichiometry in a continuous fashion.

The reaction time is at least 3 minutes. In some embodiments the reaction time is greater than 3 minutes to 75 minutes, or greater than 3 minutes to 60 minutes, or greater than 3 minutes to 30 minutes.

Melt mixing may proceed using a shear rates of 1/second to 1000/second, or 10/second to 1000/second, or 100/second to 1000/second.

Illustrative examples of bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s may be used.

The melt reaction of the intermediate polyetherimide and the bis(ether anhydride) may further include a chain stopper such as a monoanhydride or monoamine. Illustrative monoanhydrides include phthalic anhydride, glutaric anhydride, maleic anhydride, phenylmaleic anhydride, phenylsuccinic anhydride, and combinations thereof. Illustrative monoamines include aniline.

The final polyetherimide has a melt stability of -35% to 50%. Melt stability is a measurement of the thermal resistance of the polymer to viscosity changes. Melt stability as described herein is the change in viscosity after being held at 390°C for 30 minutes in a parallel plate rheometer. For example, if the melt viscosity of a polymer increases by 60% after exposure to 390°C for 30 minutes then the melt stability is 60%. If the melt viscosity decreases by 10% then the melt stability is -10

The final polyetherimide has a polydispersity index less than or equal to 2.75. The polydispersity index is the ratio of the weight average molecular weight to the number average molecular weight. Weight average molecular weight and number average molecular weight are determined by gel permeation chromatography using polystyrene standards.

The final polyetherimide may have a chlorine content less than or equal to 100 ppm, or less than or equal to 50 ppm, or, less than or equal to 25 ppm. Chlorine content can be determined using X-ray fluorescence spectrometry on a polyetherimide solid sample.

The final polyetherimide has solvent content less than 50 ppm, or less than 30 ppm, or less than 10 ppm. Solvent content is determined by liquid chromatography or gas chromatography. When a polyetherimide is made by a solution process the solvent content is greater than or equal to 50 ppm.

The final polyetherimide has a standard deviation of anhydride-amine stoichiometry of less than 0.4 mol%. The standard deviation of anhydride-amine stoichiometry is determined on the basis of 5 samples of the polyetherimide.

The invention is further demonstrated by the following non-limiting examples.

### EXAMPLES

### Example 1

A series of experiments were run in a batch mixer (Thermo Scientific's HaakeTM PolylabTM QC batch bowl mixer with 2 rotating screws) to determine the impact of various operating conditions (temperature, rpm, time) on the Mw build and the melt stability of the polymer. An intermediate polyetherimide comprising structural units derived from BPADA and m-phenylenediamine (mPD) was used. The intermediate polyetherimide had a weight average molecular weight of 7893 Daltons. The intermediate polyetherimide had an anhydride-amine stoichiometry of -23.95 mol%. The intermediate polyetherimide (50 grams) and BPADA (9.983 grams) were melt mixed in a batch mixer. The amount of dianhydride was formulated so the amount of anhydride groups and amine groups in the reaction were equivalent (on stoic). The molecular weight and polydispersity index of the resulting polymer was determined by gel permeation chromatography using polystyrene standards. Melt stability was determined at 390°C for 30 minutes in a parallel plate rheometer. Yellowness index (YI) was determined by ASTM D1925. The results are shown in Table 1.

**Table 1**

| Run # | Temp (°C) | RPM | Time (minutes) | Mw (Da) | PDI | Anhydride-amine stoichiometry (mol%) | Melt stability (%) at 390°C | YI |
|---|---|---|---|---|---|---|---|---|
| A | 330 | 150 | 30 | 41033 | 2.316 | 0.2554 | -19 | 90 |
| B | 330 | 50 | 30 | 40612 | 2.47 | 0.3831 | -3 | 97 |
| C | 350 | 150 | 30 | 44646 | 2.54 | 0.0788 | -24 | 114 |
| D | 350 | 50 | 30 | 40532 | 2.58 | 0.0847 | -18 | 92 |
| E | 340 | 100 | 30 | 41957 | 2.509 | 0.3733 | -19 | 93 |
| F | 340 | 100 | 20 | 41369 | 2.404 | 0.4172 | -5 | 90 |
| G | 340 | 100 | 10 | 39671 | 2.295 | 0.3485 | 3 | 84 |

Referring to the data in Table 1, the effect of temperature, time and rotation speed of the screws on the reaction melt stability of the polymer is shown. The effect on YI was more pronounced. A high temperature (350°C) and high screw speed (shear) as demonstrated in Example 1C resulted in degradation of the polymer as reflected in the YI of the material.

### Example 2

A mixture of an intermediate polyetherimide (PEI) (having the stoichiometry and Mw as shown in Table 2), bisphenol-A dianhydride (BPADA) and in some runs phthalic anhydride (PA), was formulated such that the final stoichiometry of the total amine end groups and total anhydride end groups was the same. The intermediate polyetherimide comprised structural units derived from BPADA and mPD. The intermediate polyetherimide stoichiometry is shown in Table 2. 65 grams (g) of this mixture was added to a batch mixer (as described above) used for blending high viscosity polymers. The operating conditions and the results of the experiment are shown in Table 2 below. The high Mw in B & C suggest that the phthalic anhydride (PA) did not get incorporated in the polymer and sublimated on addition to the hot mixing bowl maintained at 350°C.

**Table 2**

| | Intermediate PEI Anhydride-amine Stoic (mol%) | Intermediate PEI Mw (Da) | Amount of Intermediate PEI (g) | mPD (g) | BPADA (g) | PA (g) | Temp (C) | RPM | Time (min) |
|---|---|---|---|---|---|---|---|---|---|
| A | 7.79 | 26760 | 74 | 0.952 | - | - | 350 | 50 | 30 |
| B | -13.63 | 15633 | 67 | - | 8.198 | 0.125 | 350 | 50 | 30 |
| C | -7.86 | 23168 | 70 | - | 4.699 | 0.124 | 350 | 50 | 30 |
| D | -1.51 | 27807 | 70 | - | 1.557 | - | 350 | 50 | 30 |

The final polyetherimide was characterized by gel permeation chromatography to measure molecular weight and polydispersity, by FTIR to measure anhydride and amine groups in order to determine stoichiometry (stoic) and by parallel plate rheometry to measure melt stability. Results are shown in Table 3.

**Table 3**

| | Mw (Da) | PDI | Anhydride-amine Stoic (mol %) | Melt stability (%) 390°C |
|---|---|---|---|---|
| A | 58419 | 2.25 | 0.238 | -13% |
| B | 79751 | 2.80 | 0.200 | -32% |
| C | 69162 | 2.59 | -0.046 | -16% |
| D | 64712 | 2.65 | -0.162 | -3% |

### Example 3

A mixture of an intermediate polyetherimide (PEI) (having the stoichiometry and Mw as shown in Table 5), bisphenol-A dianhydride (BPADA) and in some runs phthalic anhydride (PA), was formulated such that the final stoichiometry of the total amine end groups and total anhydride end groups was the same. The intermediate polyetherimides were the same used in Example 3. These mixtures were melt mixed in an 18 mm extruder using the temperature profile shown in Table 4.

**Table 4**

| | | |
|---|---|---|
| Barrel 1 | Feed | 200 °C |
| Barrel 2 | Conveying | 200 °C |
| Barrel 3-4 | Conveying | 300 °C |
| Barrel 5-6 | Mixing | 350 °C |
| Barrel 6-12 | Mixing + Conveying | 350 °C |

Barrels 8 and 11 had a vent that had a vacuum of 10 to 12 mm Hg. The extruder screws rotated at 250 RPM.

**Table 5**

| | Intermediate PEI Anhydride-amine Stoic (mol%) | Intermediate PEI Mw (Da) | Amount of Intermediate PEI (g) | mPD (g) | BPADA (g) | PA (g) |
|---|---|---|---|---|---|---|
| A | 7.79 | 26760 | 592 | 7.61 | | |
| B | -13.63 | 15633 | 534 | | 65.34 | 1 |
| C | -7.86 | 23168 | 561 | | 38.79 | 1 |
| D | -1.51 | 27807 | 582 | | 17.19 | |

The final polyetherimide was characterized by gel permeation chromatography to measure molecular weight and polydispersity, by FTIR to measure anhydride and amine groups in order to determine stoichiometry and by parallel plate rheometry to measure melt stability. Results are shown in Table 6.

**Table 6**

| Run # | Feed rate (kg/hr) | Mw (Da) | PDI | Anhydride-amine Stoic (mol %) | Melt stability (%) 390°C |
|---|---|---|---|---|---|
| A1 | 2 | 32665 | 2.06 | 4.228 | 11% |
| A2 | 1 | 33025 | 2.29 | 4.576 | 21% |
| B1 | 2 | 56036 | 2.45 | 0.689 | -66% |
| B2 | 1 | 80513 | 2.82 | 0.415 | -56% |
| C1 | 2 | 56599 | 2.52 | 0.846 | 136% |
| C2 | 1 | 68662 | 2.59 | 0.294 | 85% |
| D1 | 2 | 54440 | 2.27 | -0.334 | 101% |
| D2 | 1 | 58951 | 2.35 | -0.511 | 52% |

The low reaction completion as a result of the low reaction time, combined with poor control over final stoichiometry during the extruder runs shown in Table 6 explains the poor melt stability observed in these run. In example A1 & A2, though the inlet recipe was for on stoichiometry product, the devolatization of volatile mPD resulted in a product that had an anhydride-amine stoichiometry of 4.5 mole%.

### Example 4

Solvent-free polymerization reactions were carried-out in an 8CV Helicone batch reactor (11.3562 L (3 gal total volume)). The monomers (BPADA and mPD) and phthalic anhydride (PA) as the chain stopper were charged as solids in the reactor and stirred for uniform mixing. The reaction was performed with the objective of making polyethermide polymer in a step-wise manner by first making an intermediate polyetherimide and then adding BPADA in a step wise manner until the desired final stoichiometry was achieved.

The reactor was charged with BPADA, mPD and PA with amount as shown in Table 7. After the reactor was charged with solid reactants, the reactor was inerted with nitrogen. The reactor shell was heated to 300°C over 70 minutes. After 70 minutes, the helical blade agitator was started and then set at 18 rpm. The heater was maintained so that the process temperature stayed between 330°C and 350°C. The pressure was kept at 101,300 Pa throughout the run. Intermediate samples were taken and analyzed for stoichiometry and Mw. A BPADA charge was made to reduce the excess amine end groups and eventually the reaction was stopped after the desired stoichiometry was achieved. The properties of the intermediate samples and final polyetherimide polymer are shown in Table 7. The Tg of the final material discharged after 220 min was 217.2 °C and the melt stability was -4%.

**Table 7**

| Time (min) | Time since mixing (min) | BPADA (g) | mPD (g) | PA (g) | rpm | Temp °C | Anydride-amine Stoic | Mw | PDI |
|---|---|---|---|---|---|---|---|---|---|
| 0 | | 2605 | 655 | 37.4 | 0 | 36 | | | |
| 70 | 0 | | | | 0 | 304 | | | |
| 100 | 30 | 345 | | | 18 | 277 | -18 | 30312 | 2.16 |
| 130 | 60 | 165 | | | 18 | 329 | -8.26 | 23468 | 2.15 |
| 190 | 120 | 90 | | | 18 | 338 | -2.81 | 38252 | 2.08 |
| 220 | 150 | | | | 18 | 346 | 0.12 | 54903 | 2.22 |

### Example 5

Solvent-free polymerization reactions were carried-out in an 8CV Helicone batch reactor (11.3562 L (3 gal total volume)). The monomers (BPADA and mPD) and phthalic anhydride as the chain stopper were charged as solids in the reactor and stirred for uniform mixing. The reaction was performed with the objective of making an intermediate polyethermide.

The reactor was charged with of 4500 g bisphenol-A dianhydride, 1135 g m-phenylene diamine and 72.9 g phthalic anhydride. After the reactor was charged with solid reactants, it was inerted with nitrogen. The reactor shell was heated to 300°C over 70 minutes. After 70 minutes, the helical blade agitator was started and then set at 18 rpm. The heater was maintained so that the process temperature stayed between 300°C and 310°C. The pressure was kept at 101,300 Pa throughout the run. The reactant contents were discharged from a bottom valve after 45 minutes. The process was repeated two times and the properties of the intermediate polyetherimides are shown in Table 8.

**Table 8**

| | Anhydride-amine Stoic | Mw | PDI |
|---|---|---|---|
| Run 1 | -20.05 | 9429 | 2.08 |
| Run 2 | -20.82 | 9081 | 2.09 |

### Example 6

Solvent-free polymerization reactions were carried-out 8 Liter Reacom reactor made by Buss SMS Canzler. The intermediate polyetherimide from Example 5 and bisphenol-A dianhydride were charged as solids in the reactor and stirred for uniform mixing. A total of 2 reactions were performed with the objective of making a final polyethermide polymer.

After the reactor was charged with solid reactants, the reactor was assembled, and inerted with argon gas. The reactor shell was heated to 330°C over 75 minutes. After the process temperature as recorded along the reactor shell walls reached 310°C, the reactants were allowed to soak heat for 45 to 75 minutes. The agitator shafts were started when the reactor contents were molten and started mixing freely and then set at 30 RPM. The temperature was maintained for time specified in the Table 9 to carry out the polymerization. The pressure was kept at 101,300 Pa and in some runs reduced to 5000 Pa for time specified in Table 9. The pressure was brought back to 101,300 Pa and polymer was discharged from a bottom valve. The polymer properties are shown in Table 10. The polyetherimide produced in each run was sampled five times and tested for anhydride-amine stoichiometry in order to evaluate the standard deviation of the anhydride-amine stoichiometry.

**Table 9**

| | Soak time | Mixing time, atmospheric | Mixing time, vacuum | Intermediate PEI | BPADA |
|---|---|---|---|---|---|
| | min | min | min | g | g |
| Run 1 | 40 | 15 | 20 | 5138.5 | 861.5 |
| Run 2 | 32 | 45 | 0 | 5110.4 | 889.6 |

**Table 10**

| | Mw | PDI | Anydride-amine Stoic | Stoic std deviation | Melt Stability % | Total Cl ppm |
|---|---|---|---|---|---|---|
| Run 1 | 53369 | 2.446 | 0.23052 | 0.0198 | 7 | 10 |
| Run 2 | 40218 | 2.5425 | -0.665 | 0.0107 | 54 | 33 |

The trace solvent content in polyetherimides made in examples 1 to 5 was non-detectable as measured by Gas Chromatography.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. Reference throughout the specification to "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH2-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization(s). "Aryl" means a monovalent, monocyclic or polycyclic aromatic group (e.g., phenyl or naphthyl). "Arylene" means a divalent, monocyclic or polycyclic aromatic group (e.g., phenylene or naphthylene). "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more halogen (F, Cl, Br, or I) substituents, which may be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C2-6 alkenyl, C2-6 alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C3-12 heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituent(s).

## Claims

1. A method of making a polyetherimide comprises melt mixing a first bis(ether anhydride) and a diamine to form an intermediate polyetherimide with an anhydride-amine stoichiometry of -2 to -40 mol% and melt mixing the intermediate polyetherimide with a second bis(ether anhydride) for greater than 3 minutes at a pressure less than atmospheric pressure and a temperature 50 to 225°C greater than the glass transition temperature of the final polyetherimide to produce a final polyetherimide, wherein the final polyetherimide has a glass transition temperature from 180°C to 310°C as determined by differential scanning calorimetry according to the standard test method ASTM D3418.

2. A method of making a polyetherimide comprises melt mixing a first polyetherimide with a diamine to produce an intermediate polyetherimide with an anhydride-amine stoichiometry of -2 to -40 mol% and melt mixing the intermediate polyetherimide with a bis(ether anhydride) at a temperature 50 to 225°C greater than the glass transition temperature of the final polyetherimide for greater than 3 minutes to produce the final polyetherimide, wherein the final polyetherimide has a glass transition temperature from 180°C to 310°C as determined by differential scanning calorimetry according to the standard test method ASTM D3418.

3. The method of claim 1 or 2, where the final polyetherimide has a polydispersity index less than or equal to 2.75 or less than or equal to 2.5.

4. The method of any one of claims 1 to 3, wherein the intermediate polyetherimide and the bis(ether anhydride) are melt mixed for greater than 3 minutes to 75 minutes, or greater than 3 minutes to 60 minutes, or greater than 3 minutes to 30 minutes.

5. The method of any one of claims 1 to 4, wherein melt mixing takes place in a melt mixing apparatus capable of having a residence time greater than three minutes.

6. The method of any one of claims 1 to 4, wherein melt mixing takes place in a batch mixer, kneader reactor, agitated thin film evaporator, or a large volume processing equipment capable of handling viscosities greater than 500,000 mPas (500,000 centipoise).

7. The method of any one of claims 1 to 6, wherein the intermediate polyetherimide has a weight average molecular weight which is 10 to 60 %, or 20 to 60 %, or 30 to 60 % of the weight average molecular weight of the final polyetherimide.

8. The method of any one of claims 1 to 7, wherein a chain stopper is melt mixed with the intermediate polyetherimide and bis(ether anhydride) to make the final polyetherimide or a chain stopper is mixed with the first bis(ether anhydride) and the diamine to form the intermediate polyetherimide.

9. The method of any one of the preceding claims wherein the diamine comprises m-phenylene diamine, p-phenylene diamine, bis(4-aminophenyl) sulfone, oxydianiline or a combination thereof.

10. The method of any one of the preceding claims, wherein melt mixing the intermediate polyetherimide with a bis(ether anhydride) occurs at a temperature 50 to 200°C, or 100 to 150°C above the glass transition temperature of the final polyetherimide, wherein the final polyetherimide has a glass transition temperature from 180°C to 310°C as determined by differential scanning calorimetry according to the standard test method ASTM D3418.

11. The method of any one of the preceding claims, wherein the final polyetherimide has an anhydride-amine stoichiometry of -1 to 2.5 mol%.

12. The method of any one of the preceding claims, wherein the method is performed in a batch mode.

13. The method of any one claims 1 to 11, wherein the method is performed in a continuous mode.

## Patentansprüche

1. Verfahren zur Herstellung eines Polyetherimids, umfassend das Schmelzmischen eines ersten Bis(etheranhydrids) und eines Diamins, um ein intermediäres Polyetherimid mit einer Anhydrid-Amin-Stöchiometrie von -2 bis -40 Mol-% zu bilden, und das Schmelzmischen des intermediären Polyetherimids mit einem zweiten Bis(etheranhydrid) für mehr als 3 Minuten bei einem Druck von weniger als Atmosphärendruck und einer Temperatur, die 50 bis 225°C höher ist als die Glasübergangstemperatur des endgültigen Polyetherimids, um ein endgültiges Polyetherimid zu bilden, wobei das endgültige Polyetherimid eine Glasübergangstemperatur von 180°C bis 310°C hat, wie durch Differentialthermoanalyse gemäß dem Standardtestverfahren ASTM D3418 bestimmt.

2. Verfahren zur Herstellung eines Polyetherimids, umfassend das Schmelzmischen eines ersten Polyetherimids mit einem Diamin, um ein intermediäres Polyetherimid mit einer Anhydrid-Amin-Stöchiometrie von -2 bis -40 Mol-% herzustellen, und das Schmelzmischen des intermediären Polyetherimids mit einem Bis(etheranhydrid) bei einer Temperatur, die 50 bis 225°C höher ist als die Glasübergangstemperatur des endgültigen Polyetherimids, für mehr als 3 Minuten, um das endgültige Polyetherimid zu bilden, wobei das endgültige Polyetherimid eine Glasübergangstemperatur von 180°C bis 310°C hat, wie durch Differentialthermoanalyse gemäß dem Standardtestverfahren ASTM D3418 bestimmt.

3. Verfahren nach Anspruch 1 oder 2, wobei das endgültige Polyetherimid einen Polydispersitätsindex von weniger als oder gleich 2,75 oder weniger als oder gleich 2,5 aufweist..

4. Verfahren nach einem der Ansprüche 1 bis 3, wobei das Polyetherimid-Zwischenprodukt und das Bis(etheranhydrid) mehr als 3 Minuten bis 75 Minuten oder mehr als 3 Minuten bis 60 Minuten oder mehr als 3 Minuten bis 30 Minuten lang in der Schmelze gemischt werden.

5. Verfahren nach einem der Ansprüche 1 bis 4, wobei das Mischen der Schmelze in einer Schmelzmischvorrichtung erfolgt, die eine Verweilzeit von mehr als drei Minuten haben kann.

6. Verfahren nach einem der Ansprüche 1 bis 4, wobei das Mischen der Schmelze in einem Chargenmischer, einem Knetreaktor, einem Dünnschichtverdampfer oder einer großvolumigen Verarbeitungsanlage erfolgt, die Viskositäten von mehr als 500.000 mPas (500.000 Centipoise) verarbeiten kann.

7. Verfahren nach einem der Ansprüche 1 bis 6, wobei das Polyetherimid-Zwischenprodukt ein gewichtsmittleres Molekulargewicht aufweist, das 10 bis 60 % oder 20 bis 60 % oder 30 bis 60 % des gewichtsmittleren Molekulargewichts des endgültigen Polyetherimids beträgt.

8. Verfahren nach einem der Ansprüche 1 bis 7, wobei ein Kettenstopper mit dem intermediären Polyetherimid und Bis(etheranhydrid) schmelzgemischt wird, um das endgültige Polyetherimid zu bilden, oder ein Kettenstopper mit dem ersten Bis(etheranhydrid) und dem Diamin gemischt wird, um das intermediäre Polyetherimid zu bilden.

9. Verfahren nach einem der vorhergehenden Ansprüche, wobei das Diamin m-Phenylendiamin, p-Phenylendiamin, Bis(4-aminophenyl)sulfon, Oxydianilin oder eine Kombination davon umfasst.

10. Verfahren nach einem der vorhergehenden Ansprüche, wobei das Schmelzmischen des Polyetherimid-Zwischenprodukts mit einem Bis(etheranhydrid) bei einer Temperatur von 50 bis 200°C oder 100 bis 150°C oberhalb der Glasübergangstemperatur des endgültigen Polyetherimids erfolgt, wobei das endgültige Polyetherimid eine Glasübergangstemperatur von 180°C bis 310°C aufweist, wie durch Differentialthermoanalyse gemäß dem Standardtestverfahren ASTM D3418 bestimmt.

11. Verfahren nach einem der vorhergehenden Ansprüche, wobei das endgültige Polyetherimid eine Anhydrid-Amin-Stöchiometrie von -1 bis 2,5 Mol-% aufweist.

12. Verfahren nach einem der vorhergehenden Ansprüche, wobei das Verfahren in einem Batch-Modus durchgeführt wird.

13. Verfahren nach einem der Ansprüche 1 bis 11, wobei das Verfahren in einem kontinuierlichen Modus durchgeführt wird.

## Revendications

1. Procédé de fabrication d'un polyétherimide comprenant le mélange à l'état fondu d'un premier bis(éther anhydride) et d'une diamine pour former un polyétherimide intermédiaire avec une stœchiométrie anhydride-amine de -2 à -40 % mol et le mélange à l'état fondu du polyétherimide intermédiaire avec un second bis(éther anhydride) pendant plus de 3 minutes à une pression inférieure à la pression atmosphérique et à une température de 50 à 225 °C supérieure à la température de transition vitreuse du polyétherimide final pour produire un polyétherimide final, le polyétherimide final ayant une température de transition vitreuse comprise entre 180 °C et 310 °C telle que déterminée par calorimétrie différentielle à balayage selon la méthode d'essai standard ASTM D3418.

2. Procédé de fabrication d'un polyétherimide comprenant le mélange à l'état fondu d'un premier polyétherimide avec une diamine pour produire un polyétherimide intermédiaire avec une stœchiométrie anhydride-amine de -2 à -40 % mol et le mélange à l'état fondu du polyétherimide intermédiaire avec un bis(éther anhydride) à une température de 50 à 225 °C supérieure à la température de transition vitreuse du polyétherimide final pendant plus de 3 minutes pour produire le polyétherimide final, le polyétherimide final ayant une température de transition vitreuse comprise entre 80 °C et 310 °C telle que déterminée par calorimétrie différentielle à balayage selon la méthode d'essai standard ASTM D3418.

3. Procédé selon la revendication 1 ou 2, où le polyétherimide final a un indice de polydispersité inférieur ou égal à 2,75 ou inférieur ou égal à 2,5.

4. Procédé selon l'une quelconque des revendications 1 à 3, dans lequel le polyétherimide intermédiaire et le bis(éther anhydride) sont mélangés à l'état fondu pendant plus de 3 minutes à 75 minutes, ou plus de 3 minutes à 60 minutes, ou plus de 3 minutes à 30 minutes.

5. Procédé selon l'une quelconque des revendications 1 à 4, dans lequel le mélange à l'état fondu a lieu dans un appareil de mélange à l'état fondu capable d'avoir un temps de séjour supérieur à trois minutes.

6. Procédé selon l'une quelconque des revendications 1 à 4, dans lequel le mélange à l'état fondu a lieu dans un mélangeur en discontinu, un réacteur malaxeur, un évaporateur à film mince agité, ou un équipement de traitement de grand volume capable de traiter des viscosités supérieures à 500 000 mPas (500 000 centipoises).

7. Procédé selon l'une quelconque des revendications 1 à 6, dans lequel le polyétherimide intermédiaire a une masse moyenne molaire en masse qui est de 10 à 60 %, ou de 20 à 60 %, ou de 30 à 60 % de la masse moyenne molaire en masse du polyétherimide final.

8. Procédé selon l'une quelconque des revendications 1 à 7, dans lequel un stoppeur de chaîne est mélangé à l'état fondu avec le polyétherimide intermédiaire et le bis(éther anhydride) pour fabriquer le polyétherimide final, ou un stoppeur de chaîne est mélangé avec le premier bis(éther anhydride) et la diamine pour former le polyétherimide intermédiaire.

9. Procédé selon l'une quelconque des revendications précédentes dans lequel la diamine comprend du m-phénylène diamine, du p-phénylène diamine, de la bis(4-aminophényl)sulfone, de l'oxydianiline, ou une combinaison de ceux-ci.

10. Procédé selon l'une quelconque des revendications précédentes, dans lequel le mélange à l'état fondu du polyétherimide intermédiaire avec un bis(éther anhydride) se produit à une température de 50 à 200 °C, ou de 100 à 150 °C au-dessus de la température de transition vitreuse du polyétherimide final, le polyétherimide final ayant une température de transition vitreuse comprise entre 180 °C et 310 °C telle que déterminée par calorimétrie différentielle à balayage selon la méthode d'essai standard ASTM D3418.

11. Procédé selon l'une quelconque des revendications précédentes, dans lequel le polyétherimide final a une stœchiométrie anhydride-amine de -1 à 2,5 % mol.

12. Procédé selon l'une quelconque des revendications précédentes, dans lequel le procédé est réalisé en mode de traitement par lots.

13. Procédé selon l'une quelconque des revendications 1 à 11, dans lequel le procédé est réalisé en mode continu.
